# EUROPÄISCHE PATENTSCHRIFT

(11) **EP 2 069 714 B1**
(45) Veröffentlichungstag und Bekanntmachung des Hinweises auf die Patenterteilung: **21.07.2010**
(21) Anmeldenummer: 07802850.3
(22) Anmeldetag: 24.08.2007
(51) Int. Cl.: G01B 11/275

(54) **VERFAHREN ZUR FAHRWERKSVERMESSUNG EINES KRAFTFAHRZEUGS, FAHRWERKSVERMESSUNGSEINRICHTUNG SOWIE KRAFTFAHRZEUGPRÜFSTRASSE**
METHOD FOR MEASURING THE CHASSIS OF A MOTOR VEHICLE, DEVICE FOR MEASURING A CHASSIS AND MOTOR VEHICLE TESTING UNIT
PROCEDE POUR LA MESURE DU TRAIN DE ROULEMENT D`UN VEHICULE AUTOMOBILE, DISPOSITIF DE MESURE DU TRAIN DE ROULEMENT AINSI QUE VOIE DE CONTROLE

(30) Priorität: 06.09.2006 DE 102006041822
(43) Veröffentlichungstag der Anmeldung: 17.06.2009
(73) Patentinhaber: Robert Bosch GmbH, 70442 Stuttgart (DE)
(72) Erfinder: DRY, Craig, 82293 München (DE); BUX, Hermann, 86559 Adelzhausen (DE); SCHOMMER, Stefan, 85716 Unterschleissheim (DE)
(86) Internationale Anmeldenummer: PCT/EP2007/058800
(87) Internationale Veröffentlichungsnummer: WO 2008/028826

(56) Entgegenhaltungen:
- EP-A- 0 120 329
- WO-A-02/31437
- DE-A1- 19 757 760

## Beschreibung

Die Erfindung betrifft ein Verfahren zur Fahrwerksvermessung eines Kraftfahrzeugs durch eine berührungslos messende Fahrwerksvermessungseinrichtung mit zwei einander gegenüber angeordneten Messgeräten, eine Fahrwerksvermessungseinrichtung für Kraftfahrzeuge sowie eine Kraftfahrzeugprüfstrasse mit einer derartigen Fahrwerksvermessungseinrichtung

Bevor das Fahrwerk eines Kraftfahrzeugs vermessen werden kann, müssen häufig Sensoren oder Hilfsmittel, bspw. Targets an den jeweiligen Radfelgen oder an den Rädern angebracht werden. Diese aufwändigen Vorbereitungstätigkeiten widersprechen aber der Forderung nach kurzen Messzeiten im Annahmebereich einer Werkstatt und diese Vorbereitungstätigkeiten machen die Fahrwerksvermessung teuer.

Das Dokument WO 02/31437 A1 offenbart eine Vorrichtung zum Bestimmen der Rad- und/oder Achsgeometrie von Kraftfahrzeugen in einem Messraum mittels einer optischen Messeinrichtung mit mindestens zwei Bildaufnahmeeinrichtungen, die aus zumindest zwei unterschiedlichen Perspektiven eine Markierungseinrichtung einschließlich mindestens eines an einem Rad vorhandenen oder angeordneten Radmerkmals und mindestens eines Karosseriemerkmals und einer Bezugsmerkmalsanordnung mit mindestens drei zumindest in einer Ebene versetzten Bezugsmerkmalen erfassen, und mit einer Auswerteeinrichtung. Die Erfassung der Markierungseinrichtung erfolgt während der Vorbeifahrt des Kraftfahrzeuges, und die Drehachse eines vermessenen Rades wird durch gleichzeitiges Erfassen des mindestens einen Radmerkmals und des mindestens einen Karosseriemerkmals zu mehreren Zeitpunkten in dem Messraum ermittelt. Die Vertikalenrichtung im Messraum wird auf der Grundlage der Referenzierung bestimmt, zur Messung wird die gegenseitige Position und Lage (Referenzierung) der mindestens zwei Bildaufnahmeeinrichtungen mit der Bezugsmerkmalsanordnung vorgenommen. Die Referenzierung wird vor der Vorbeifahrt vorgenommen, und die Bezugsmerkmale sind bekannt, oder die Referenzierung wird vor der Vorbeifahrt vorgenommen und mindestens fünf unbekannte Bezugsmerkmale werden verwendet oder die Referenzierung wird während der Vorbeifahrt vorgenommen und mindestens fünf unbekannte Bezugsmerkmale werden verwendet. Die Richtung der Fahrachse des Kraftfahrzeugs in der Auswerteeinrichtung wird auf der Grundlage der Erfassung der Markierungseinrichtung gesondert für jedes Rad aus einer Bewegungsbahn des mindestens einen Karosseriemerkmals ermittelt, und die Lage der Drehachse des Rades wird bezüglich der Vertikalen und der Richtung der Fahrachse bestimmt.

Es ist daher Aufgabe der vorliegenden Erfindung, ein Verfahren sowie eine Vorrichtung zur Fahrwerksvermessung anzugeben, mit dem das Fahrwerk eines Kraftfahrzeugs schneller und kostengünstiger vermessen werden kann.

Diese Aufgabe wird durch den Gegenstand der unabhängigen Patentansprüche gelöst. Vorteilhafte Weiterbildungen ergeben sich aus den abhängigen Ansprüchen.

Das erfindungsgemäße Verfahren zur Fahrwerksvermessung eines Kraftfahrzeugs arbeitet mit einer berührungslos d. h. optisch messenden Fahrwerksvermessungseinrichtung mit zwei einander gegenüber angeordneten Messgeräten. Dabei wird zunächst eine erste Fahrzeugachse mit zwei Radfelgen zwischen den beiden Messgeräten positioniert und die beiden Radfelgen dieser ersten Fahrzeugachse werden durch die zwei Messgeräte berührungslos vermessen. Anschließend wird eine zweite Fahrzeugachse zwischen den zwei Messgeräten positioniert, und die Radfelgen der zweiten Fahrzeugachse werden durch die beiden Messgeräte vermessen. Aus den in den beiden Messungen ermittelten Messwerten werden durch die Fahrwerksvermessungseinrichtung die Radstellungswerte aller vier vermessenen Radfelgen ermittelt. Dabei werden die Radstellungswerte aller Achsen miteinander verrechnet. Bei einem zweiachsigen Kraftfahrzeug, insbesondere bei einem Pkw, werden können optional die Hinterachswerte in die Vorderachse mit eingerechnet werden.

Gemäß der Erfindung wird eine Positionier- oder Auffahrhilfe vorgesehen, damit die Fahrzeugachsen bzw. die Radfelgen jeweils einer Fahrzeugachse möglichst einfach zu den zwei Messgeräten positioniert werden können, und so dass demgemäß die Fahrwerksvermessungseinrichtung einfach und sicher benutzt werden kann.

Eine komfortable und genaue Positionier- oder Auffahrhilfe ist bspw. in der EP-A-2 064 516 der gleichen Anmelderin mit dem gleichen Anmeldetag beschrieben. Dabei kann über ein Rückmeldungssignal, bspw. über einen Bildschirm oder Monitor die Position der Radfelgen zu den Messgeräten angezeigt und ein Rückmeldungssignal über eine vorzunehmende Positionsänderung und deren Richtung ausgegeben werden. Ein derartiges Positionierverfahren kann in die Steuerung der erfindungsgemäßen Fahrwerksvermessungseinrichtung integriert werden. Die Hinterachswerte sind für die Fahrwerksvermessung von Bedeutung. Zur Verrechnung der Hinterachswerte und der Vorderachswerte bei dem erfindungsgemäßen Verfahren (Diagnoseversion) wird das Verfahren in Geradeausfahrt begonnen und die erste Achse wird eingefahren bzw. zwischen den beiden Messgeräten positioniert. Währenddessen wird nicht eingelenkt, und so können die Messwerte der Hinterachse, insbesondere die Spurwerte der Hinterachse, zu den Messwerten der Vorderachse in Beziehung gesetzt werden, um den realen Fahrzustand, die Stellung der Vorderräder zur geometrischen Fahrachse, und den resultierenden Fahrachswinkel zu berechnen.

Gemäß einem Grundgedanken der Erfindung ermöglicht das erfindungsgemäße Verfahren die vollständige Vermessung des Fahrwerks eines Kraftfahrzeugs mit einer berührungslos arbeitenden, optischen Fahrwerksvermessungseinrichtung, die lediglich zwei einander gegenüber angeordnete Messgeräte aufweist und für die keine am am Rad anzubringenden Sensoren oder Targets erforderlich sind.

Dadurch dass nur zwei Messgeräte erforderlich sind und das Fahrwerk des Kraftfahrzeugs nacheinander achsweise vermessen wird, wird eine hochwertige Fahrwerksvermessungseinrichtung bzw. Achsmessanlage bereitgestellt, die gleichzeitig sehr schnell arbeitet und sehr kostengünstig ist. Dies ist von besonderer Bedeutung, zumal im Annahmebereich einer Werkstatt insbesondere der Faktor Geschwindigkeit einer Messung ausschlaggebend ist.

Die Messgeräte weisen vorteilhafterweise jeweils zwei Messköpfe mit Messkameras und mit Messsensoren auf, und die beiden Messköpfe sind unter unterschiedlichen Winkeln auf jeweils eine zu vermessende Radfelge ausgerichtet. Bspw können die Messgeräte wie in Figur 3 der DE 10 2005 022 565.9 beschrieben aufgebaut sein.

Gemäß einer ersten Ausführungsform der Erfindung sind bzw. werden die Vermessungsabläufe in der Fahrwerksvermessungseinrichtung, insbesondere in einer Datenverarbeitungseinheit bspw. einem Werkstattrechner der Fahrwerksvermessungseinrichtung gespeichert. Die Vermessungsabläufe werden dann durch die Fahrwerksvermessungseinrichtung, insbesondere durch deren Datenverarbeitungseinheit gesteuert. Durch das Abspeichern von vorgegebenen Vermessungsabläufen können standardisierte und fahrzeugspezifische Daten und Abläufe verwendet werden, wodurch die Qualität der erhaltenen Messergebnisse verbessert werden kann. Vorteilhafterweise werden die in den Vermessungsabläufen gemessenen Werte für die Radfelgen in der Fahrwerksvermessungseinrichtung, insbesondere in deren Datenverarbeitungseinheit gespeichert, damit auf diese jederzeit bei Bedarf zurückgegriffen werden kann.

Ebenso können die aus den gemessenen Werten ermittelten Radstellungswerte aller vermessenen Radfelgen in der Fahrwerksvermessungseinrichtung gespeichert und/oder an einem Bildschirm visualisiert und/oder entsprechend einem Kundenwunsch gedruckt und/oder an eine Schnittstelle, in der Regel eine Netzwerkschnittstelle, übertragen werden, damit diese ggf. weiterverarbeitet oder mit anderen Daten verglichen werden können.

In einer weiteren Ausführungsform der Erfindung werden die zwei Messgeräte ortsfest einander gegenüber installiert, wodurch diese in einem festen räumlichen Bezug zueinander stehen und wodurch ein separates Bezugsystem entfallen kann.

Alternativ dazu können die beiden Messgeräte auch verschiebbar sein und einander gegenüber aufgestellt werden. Um die genaue Position der beiden Messgeräte zueinander zu bestimmen, weisen die beiden Messgeräte ein Bezugsystem auf. Dieses Bezugsystem kann durch separate Bezugssystemköpfe oder Bezugsystemsensoren gebildet werden, die auf oder in den Messgeräten angeordnet sind. Ein derartiges Bezugsystem ist in der EP 1 184 640 A2 für eine Fahrwerksvermessungseinrichtung mit vier Messgeräten beschrieben. Sinngemäß kann ein Bezugsystem für die vorliegende Fahrwerksvermessungseinrichtung mit zwei Messgeräten ein Messtarget umfassen, das an einem der beiden Messgeräte im Sichtbereich des anderen Messgeräts angeordnet ist, wenn dazwischen kein Kraftfahrzeug aufgestellt ist. Dementsprechend reicht als Bezugsystem für die beiden verschiebbaren Messgeräte eine einzige Querverbindung aus. Um die Genauigkeit noch weiter zu erhöhen, kann auf jedem Messgerät sowohl ein Messtarget als auch eine separate Referenzkamera ausgebildet sein, wobei das Referenztarget der einen Kamera jeweils im Blickfeld der Referenzkamera liegt, wenn zwischen den beiden Messgeräten kein Kraftfahrzeug steht. Ebenso kann für die Sturzmessung eine Referenz zur Richtung der Schwerkraft vorgesehen werden, um die Ausrichtung der Messgeräte dazu bei der Positionierung und bei der Fahrwerksvermessung zu berücksichtigen. Diese Referenz zur Sturzmessung kann bspw. in Form eines Pendels oder in anderer dem Fachmann bekannter Weise ausgebildet sein, und sie kann ebenfalls in dem Bezugssystem integriert sein.

Gemäß einer weiteren vorteilhaften Ausführungsform der Erfindung, werden die Schritte des Positionierens einer weiteren Fahrzeugachse zwischen den zwei Messgeräten und des berührungslosen Vermessens der beiden Radfelgen der weiteren Fahrzeugachse durch die zwei Messgeräte für eine dritte und ggf. jede weitere Fahrzeugachse wiederholt. Dadurch ist das vorliegende erfindungsgemäße Verfahren auch auf Kraftfahrzeuge mit drei oder mehr Achsen, insbesondere für Nutzfahrzeuge und LKWs anwendbar. Um die Radstellungswerte aller vermessenen Radfelgen zu ermitteln, können die Messwerte der Radfelgen aller n Achsen miteinander verrechnet werden.

Des weiteren kann nach Abschluss eines Vermessungsschritts für die Radfelgen einer Achse ein Hinweis an den Benutzer generiert werden, bspw. über ein optisches Signal (Bildschirm, Anzeigegerät) oder über ein akustisches Signal (Summton, Sprachausgabe), dass das Kraftfahrzeug weiter nach vorne gefahren werden soll, damit die Radfelgen der nächsten Achse zwischen den beiden Messgeräten positioniert sind.

Die Erfindung betrifft auch eine Fahrwerksvermessungseinrichtung für Kraftfahrzeuge, die zwei Messgeräte aufweist. Diese sind auf einem Messplatz derart einander gegenüber positioniert oder positionierbar, dass beide Messgeräte jeweils einer Radfelge derselben Achse eines Kraftfahrzeugs zugeordnet sind und dass durch ein Messgerät jeweils eine Radfelge vermessen werden kann. Die relativen Positionen der Messgeräte zueinander sind bei der Durchführung der Messungen bestimmt. Die Fahrwerksvermessungseinrichtung umfasst auch eine Datenverarbeitungseinheit, insbesondere einen Werkstattrechner, die bzw. der in der Lage ist, die Messergebnisse von aufeinanderfolgenden Messungen von Radfelgen mindestens zweier Fahrzeugachsen des Kraftfahrzeugs unter Berücksichtigung der relativen Position der Messgeräte zueinander in Radstellungswerte umzurechnen. Ferner verfügt die Fahrwerksvermessungeinrichtung über eine Ausgabeeinheit zur Ausgabe der Radstellungswerte. Um die Positionierung der Fahrzeugachsen bzw. deren Radfelgen zu den Messgeräten zu vereinfachen, ist eine Positionierhilfe wie oben beschrieben vorgesehen.

Mit dieser Fahrwerksvermessungseinrichtung wird eine hochwertige Achsmessanlage zur Verfügung gestellt, die das Fahrwerk eines Kraftfahrzeugs schnell und zuverlässig vermisst und die dabei aufgrund der Tatsache, dass sie nur zwei Messgeräte braucht, auch kostengünstig ist.

In einer Ausführungsform der Fahrwerksvermessungseinrichtung weisen die zwei Messgeräte jeweils zwei Messköpfe mit Messkameras und Messsensoren auf, die unter unterschiedlichen Winkeln auf eine zu vermessende Radfelge gerichtet sind. Die Messköpfe können dabei wie in Figur 3 der DE 10 2005 022 565.9 beschrieben aufgebaut sein, und zusätzlich kann für die Sturzmessung noch eine Referenz zur Schwerkraft wie oben beschrieben vorgesehen werden. Mit einem derartigen Messgerät kann eine berührungslose Messung des Fahrwerks durchgeführt werden, wobei sehr genaue Messergebnisse erhalten werden.

Wenn die zwei Messgeräte fest einander gegenüber installiert sind, ist deren relative Position zueinander definiert, und es braucht kein Bezugsystem vorgesehen zu werden.

Alternativ dazu können die Messgeräte auf dem Messplatz verschiebbar ausgebildet sein. In diesem Fall sollte ein Bezugsystem vorgesehen werden, das eine Querverbindung der beiden Messgeräte beinhaltet, wie oben beschrieben. Dadurch können die relativen Positionen der Messgeräte zueinander bestimmt werden und die Radstellungswerte der vermessenen Radfelgen können genau ermittelt werden.

Des weiteren können in der Datenverarbeitungseinheit, insbesondere dem Werkstattrechner, Vermessungsabläufe zur Steuerung der Vermessungen der zwei Messgeräte gespeichert sein, so dass auf standardisierte Abläufe und Daten zurückgegriffen werden kann, wodurch die Vermessungen vereinfacht und deren Ergebnisse verbessert werden.

Mit der Fahrwerksvermessungseinrichtung der oben beschriebenen Art können Fahrzeuge mit zwei Achsen, bspw. Pkw's sowie Fahrzeuge mit mehr als zwei Achsen wie bspw. Nutzfahrzeuge, vermessen werden, indem nacheinander die Radfelgen jeder Achse gegenüber den beiden Messgeräten positioniert und anschließend vermessen werden, und indem schließlich die Radstellungswerte aller Achsen miteinander verrechnet werden.

Die Erfindung betrifft ferner eine Kraftfahrzeugprüfstrasse, in der eine Fahrwerksvermessungseinrichtung der oben beschriebenen Art integriert ist. Dadurch kann die in den Prüfstrassen bekannte Spurplatte ersetzt werden, was Kosten spart. Vorteilhaft ist dabei der erweiterte Messumfang - zumindest Spur und Sturz - im Gegensatz zur Spurplatte, die nur einen spurähnlichen Wert liefert. Durch das Einsparen der Spurplatte und durch das erfindungsgemäße Anordnen der Messköpfe neben dem Fahrwerkstester, kann die Prüfstrasse verkürzt werden und benötigt damit weniger Platz, was einen weiteren Vorteil darstellt. Die Messköpfe der Messgeräte dienen gleichzeitig als Positionierhiffe für den Fahrwerkstester, so dass die Radfelgen einer Achse des Kraftfahrzeugs besonders einfach gegenüber den Messgeräten ausgerichtet werden können. Schließlich kann die Fahrwerksvermessungseinrichtung der oben beschriebenen Art als weiteres Gerät in einen Automatik- bzw. Superautomatikbetrieb integriert werden.

Eine Kraftfahrzeug-Prüfstraße umfasst einen Fahrwerkstester sowie einen Bremsenprüfstand und normalerweise noch eine Spurplatte, die bei der erfindungsgemäßen Kraftfahrzeugprüfstrasse jedoch vorteilhafterweise entfallen kann. In Prüforganisationen ist die Kraftfahrzeug-Prüfstraße oft noch um einen Gelenkspieltester erweitert, der wiederum in einer Grube oder einer Hebebühne intergriert ist. In manchen Fällen ist die Kraftfahrzeug-Prüfstraße noch um einen Abgastester und um ein Scheinwerfereinstellgerät erweitert.

Zusammenfassend kann die Fahrwerksvermessungseinrichtung für Kraftfahrzeuge der oben beschriebenen Art auch als Achsmessgerät für die Diagnose und Annahme bezeichnet werden.

Die Erfindung ist nachfolgend anhand von Ausführungsbeispielen mit Bezug auf die beiliegenden Zeichnungen näher erläutert.
- Figur 1: zeigt eine schematische Draufsicht auf einen Messplatz mit einem auf dem Messplatz stehenden Kraftfahrzeug;
- Figur 2: zeigt eine schematische Draufsicht auf den Messplatz aus Figur 1 mit einem in dem Messplatz weiter vorne angeordneten Kraftfahrzeug; und
- Figur 3: zeigt ein Ablaufdiagramm eines erfindungsgemäßen Verfahrens zur Fahrwerksvermessung des Kraftfahrzeugs aus den Figuren 1 und 2.

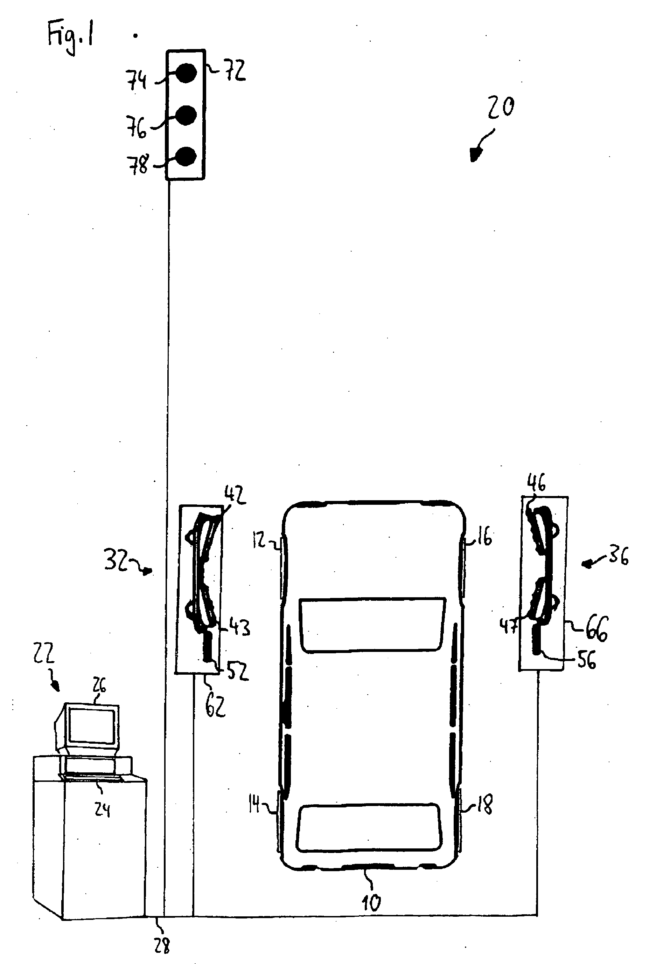

Figur 1 zeigt eine schematische Draufsicht auf einen Messplatz 20 mit einem auf dem Messplatz 20 stehenden Kraftfahrzeug 10.

Das Kraftfahrzeug 10 ist auf dem Messplatz 20 zur Vermessung seines Fahrwerks angeordnet. Das Kraftfahrzeug 10 verfügt über eine vordere linke Radfelge 12, über eine hintere linke Radfelge 14, über eine vordere rechte Radfelge 16 und über eine hintere rechte Radfelge 18.

Auf dem Messplatz 20 sind zwei Messgeräte 32 und 36 einander gegenüber angeordnet. Die beiden Messgeräte 32 und 36 weisen zwei entlang der Längsachse des Kraftfahrzeugs 10 verschiebbare Grundplatten 62 und 66 auf. Auf diesen Grundplatten 62 und 66 sind jeweils zwei Messkameras 42, 43 und 46, 47 angeordnet, die unter unterschiedlichen Winkeln auf die jeweils gegenüberliegende Radfelge 12 und 16 gerichtet sind.

Auf den verschiebbaren Grundplatten 62 und 66 der Messgeräte 32 und 36 sind weiterhin Bezugsystem-Messköpfe 52 und 56 angeordnet, die eine Querverbindung zwischen den beiden Messgeräten 32 und 36 bilden, um so die relativen Positionen der Messgeräte 32 und 36 zueinander zu bestimmen. In einem einfachen Ausführungsbeispiel dieses Bezugsystems ist einer der beiden Bezugsystemmessköpfe 52 oder 56 als Messtarget und der andere als Messkamera ausgebildet. In einem noch genauer arbeitenden Ausführungsbeispiel verfügen beide Bezugsystemmessköpfe 52 und 56 jeweils über eine Messkamera und über ein Messtarget, das von der jeweils gegenüberliegenden Messkamera erkannt werden kann, um die relativen Positionen der Messgeräte 32 und 36 zueinander zu bestimmen. Zusätzlich kann für die Sturzmessung noch eine Referenz zur Schwerkraft wie oben beschrieben vorgesehen werden. Mit einem derartigen Bezugsystem genügt eine grob justierte Aufstellung der Messgeräte 32 und 36 für eine genaue Bestimmung der relativen Lagen und der Abstände der Messgeräte 32 und 36 zueinander. Diese können laufend gemessen und auch nachjustiert werden.

In einem alternativen Ausführungsbeispiel können die Messgeräte 32 und 36 auch ortsfest innerhalb des Messplatzes 20 angeordnet sein, in diesem Fall können die beweglichen Grundplatten 62 und 66 sowie die Bezugsystemmessköpfe 52 und 56 entfallen, denn die relative Position der Messgeräte 32 und 36 zueinander ist durch deren ortsfeste Aufstellung bekannt und definiert.

In Figur 1 ist des weiteren ein Anzeigegerät 72 dargestellt, das eine Leuchtanzeige "vorwärts" 74, eine Leuchtanzeige "stopp" 76 und eine Leuchtanzeige "rückwärts" 78 umfasst. Die Leuchtanzeigen "vorwärts" 74 und "rückwärts" 78 geben dem Bediener an, in welche Richtung das Kraftfahrzeug 10 zu bewegen ist, damit die Radfelgen 12, 16 bzw. 14, 18 der betreffenden Fahrzeugachse optimal gegenüber den Messgeräten 32 und 36 ausgerichtet sind. Die Leuchtanzeige "stopp" 76 gibt an, dass die Radfelgen 12, 16 bzw. 14, 18 der jeweiligen Fahrzeugachse optimal gegenüber den Messgeräten 32 und 36 positioniert sind.

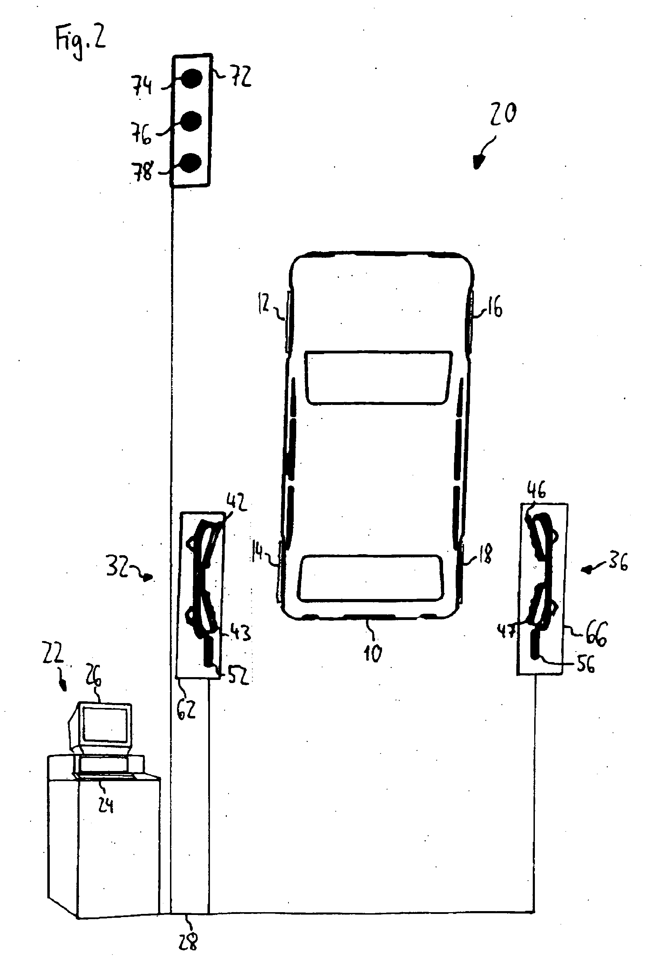

Das Anzeigegerät 72 ist in den Figuren 1 und 2 nur beispielhaft in Form einer Ampel dargestellt, ebenso sind andere Visualisierungen bspw. durch eine Pfeilsteuerung auf einen Bildschirm oder akustische oder mechanische Rückmeldungssignale möglich. Das Anzeigegerät 72 ist bevorzugt ausserhalb des Kraftfahrzeugs 10 im Sichtbereich des Fahrers angeordnet. Alternativ dazu kann das Anzeigegerät 72 auch eine mobile Einheit sein, die vom Fahrer im Kraftfahrzeug 10 mitgeführt werden kann.

In Figur 1 ist des weiteren ein Werkstattrechner 22 mit einer Tastatur 24 und einem Bildschirm 26 zu erkennen, der über Verbindungsleitungen 28 mit den Messgeräten 32 und 36 und mit dem Anzeigegerät 72 verbunden ist. Die Verbindungsleitungen 28 können kabelgebunden oder oder als Funkverbindungen ausgebildet sein.

Die Fahrwerksvermessungseinrichtung umfasst die beiden Messgeräte 32 und 36, den Werkstattrechner 22 und das Anzeigegerät 72.

In Figur 1 steht das Kraftfahrzeug 10 so auf dem Messplatz 20, dass die Radfelgen 12 und 16 seiner Vorderachse optimal gegenüber den Messgeräten 32 und 36 positioniert sind.

Figur 2 zeigt eine schematische Draufsicht auf den Messplatz 20 mit einem in dem Messplatz 20 weiter vorne angeordneten Kraftfahrzeug 10.

Gleiche Elemente sind in der Figur 2 durch die gleichen Bezugszeichen wie in Figur 1 gekennzeichnet. Diese werden zur Vermeidung von Wiederholungen nicht noch einmal erläutert.

In Figur 2 steht das Kraftfahrzeug 10 so in dem Messplatz 20, dass die Radfelgen 14 und 18 seiner Hinterachse optimal gegenüber den Messgeräten 32 und 36 positioniert sind.

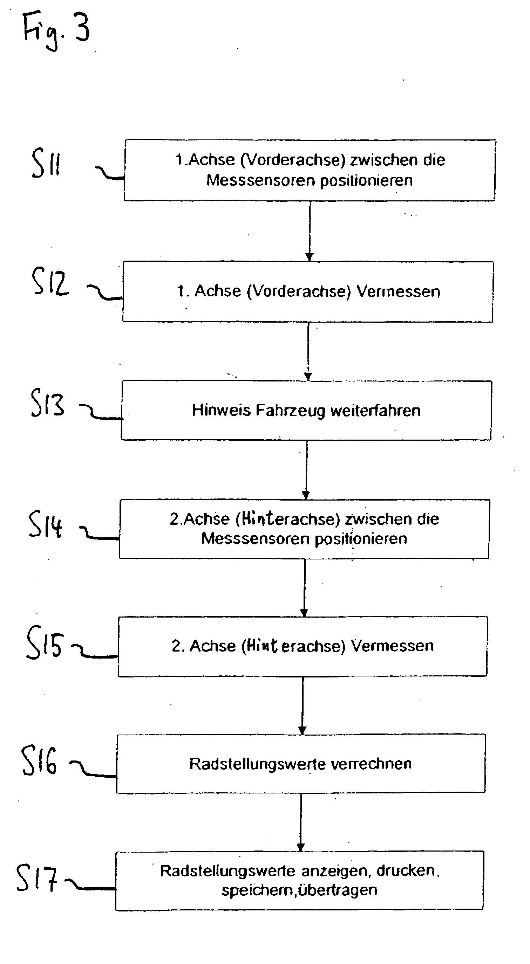

Figur 3 zeigt ein Ablaufdiagramm eines erfindungsgemäßen Verfahrens zur Fahrwerksvermessung des Kraftfahrzeugs 10 durch die berührungslos messende, in den Figuren 1 und 2 gezeigte Fahrwerksvermessungseinrichtung. Dieses Verfahren kann auch als Diagnosevermessung mit einem optisch berührungslos messenden System bezeichnet werden.

Im Verfahrensschritt S11 wird die Vorderachse des Kraftfahrzeugs 10 so zwischen den Messgeräten 32 und 36 positioniert, dass die Radfelgen 12 und 16 optimal gegenüber den Messkameras 42, 43 und 46, 47 ausgerichtet sind. Dies erfolgt mit Hilfe einer Positionierhilfe, bspw. mit Hilfe des Anzeigegeräts 72. Diese Position des Kraftfahrzeugs 10 ist in der Figur 1 gezeigt.

Im Verfahrensschritt S12 werden nun die Radfelgen 12 und 16 nach einem in der Fahrwerksvermessungseinrichtung, insbesondere in dem Werkstattrechner 22 hinterlegten Ablauf vermessen, und die gemessenen Werte werden gespeichert. Nun erfolgt im Verfahrensschritt S13 ein Hinweis an den Benutzer, das Kraftfahrzeug 10 innerhalb des Messplatzes 20 weiter nach vorne zu fahren. Dieser Hinweis kann bspw. durch Aufleuchten der Anzeige "vorwärts" 74 des Anzeigegeräts 72 erfolgen. Ebenso kann ein solcher Hinweis auf dem Bildschirm 26 angezeigt werden, oder es kann ein entsprechendes Summ- oder Sprachsignal abgegeben werden.

Im Verfahrensschritt S14 wird die Hinterachse des Kraftfahrzeugs so zwischen den Messgeräten 32 und 36 positioniert, dass die Radfelgen 14 und 18 optimal bzgl. den Messkameras 42, 43 und 46, 47 ausgerichtet sind. Dies erfolgt mit Hilfe einer Positionierhilfe, bspw. mit Hilfe des Anzeigegeräts 72. Diese Position des Kraftfahrzeugs 10 ist in Figur 2 gezeigt.

Im Verfahrensschritt S15 wird nun die Hinterachse, insbesondere deren Radfelgen 14 und 18, vermessen und zwar ebenfalls nach einem in der Fahrwerksvermessungseinrichtung, insbesondere in deren Werkstattrechner 22 hinterlegten Ablauf, und die gemessenen Werte werden gespeichert.

Im Verfahrensschritt S16 werden nun die Radstellungswerte aller Achsen miteinander verrechnet. Zur Verrechnung der Hinterachswerte und der Vorderachswerte bei dem erfindungsgemäßen Verfahren (Diagnoseversion) wird das Verfahren in Geradeausfahrt begonnen und die erste Achse wird eingefahren bzw. zwischen den beiden Messgeräten positioniert. Währenddessen wird nicht eingelenkt, und so können die Messwerte der Hinterachse, insbesondere die Spurwerte der Hinterachse, zu den Messwerten der Vorderachse in Beziehung gesetzt werden, um den realen Fahrzustand, die Stellung der Vorderräder zur geometrischen Fahrachse, und den resultierenden Fahrachswinkel zu berechnen. Auch wirken sich die bei dem erfindungsgemäßen Verfahren (Diagnoseversion) gemessenen Höhenstände vorne und hinten möglicherweise auf die Sollwerts und den Soll-/Istvergleich der jeweils anderen Achse aus, was ebenfalls berücksichtigt werden kann.

Im Verfahrensschritt S17 werden die Messergebnisse am Bildschirm 26 visualisiert und/oder entsprechend einem Kundenwunsch auf einem Drucker ausgedruckt und/oder gespeichert und/oder an eine Schnittstelle, vorzugsweise eine Netzwerkschnittstelle, übertragen.

Bei einem zweiachsigen Kraftfahrzeug 10, wie es in den Figuren 1 und 2 gezeigt ist, können optional die Hinterachswerte in die Vorderachse eingerechnet werden.

Für ein Kraftfahrzeug mit mehr als zwei Achsen, wie bspw. für Nutzfahrzeuge, kann das Verfahren entsprechend dadurch erweitert werden, dass die Verfahrensschritte S13, S14 und S15 für die dritte und ggf. für jede weitere Achse wiederholt werden. Dadurch können durch die erfindungsgemäße Fahrwerksvermessungseinrichtung auf einfache Weise auch Fahrzeuge mit mehr als zwei Achsen vermessen werden. Bei Nutzfahrzeugen, insbesondere bei LKW's, können optional n Achsen miteinander verrechnet werden.

### Bezugszeichenliste

- 10: Kraftfahrzeug
- 12, 14, 16, 18: Radfelgen
- 20: Messplatz
- 22: Werkstattrech ner
- 24: Tastatur
- 26.: Bildschirm
- 28: Verbindungsleitungen
- 32, 36: Messgeräte
- 42, 43; 46, 47: Messkameras
- 52, 56: Bezugssystem-Messköpfe
- 62, 66: Grundplatten
- 72: Anzeigegerät
- 74: Anzeige "Vorwärts"
- 76: Anzeige "Stop"
- 78: Anzeige "Rückwärts"

## Patentansprüche

1. Verfahren zur Fahrwerksvermessung eines Kraftfahrzeugs (10) durch eine berührungslos messende Fahrwerksvermessungseinrichtung mit zwei einander gegenüber angeordneten Messgeräten (32, 36) umfassend:
a) Positionieren unter Verwendung einer Positionierhilfe (72) einer ersten Fahrzeugachse zwischen den zwei Messgeräten (32, 36) derart, dass das Kraftfahrzeug (10) so auf dem Messplatz (20) steht, dass die Radfelgen (12, 16) seiner ersten Fahrzeugachse optimal gegenüber den Messgeräten (32, 36) positioniert sind;
b) Berührungsloses Vermessen der beiden Radfelgen (12, 16) der ersten Fahrzeugachse durch die zwei Messgeräte (32, 36);
c) Positionieren unter Verwendung einer Positionierhilfe (72) einer zweiten Fahrzeugachse zwischen den zwei Messgeräten (32, 36) derart, dass das Kraftfahrzeug (10) so auf dem Messplatz (20) steht, dass die Radfelgen (14, 18) seiner zweiten Fahrzeugachse optimal gegenüber den Messgeräten (32, 36) positioniert sind;
d) Berührungsloses Vermessen der beiden Radfelgen (14, 18) der zweiten Fahrzeugachse durch die zwei Messgeräte (32, 36); und
e) Ermitteln der Radstellungswerte aller vermessenen Radfelgen (12, 14, 16, 18) durch die Fahrwerksvermessungseinrichtung.

2. Verfahren nach Anspruch 1, wobei die Vermessungsabläufe in der Fahrwerksvermessungseinrichtung, insbesondere in einer Datenverarbeitungseinheit (22) der Fahrwerksvermessungseinrichtung, gespeichert sind, und wobei die Vermessungsabläufe in den Schritten b) und d) durch die Fahrwerksvermessungseinrichtung, insbesondere durch deren Datenverarbeitungseinheit (22), gesteuert werden.

3. Verfahren nach Anspruch 1 oder 2, wobei die in den Vermessungsabläufen in den Schritten b) und d) gemessenen Werte im Fahrwerksvermessungseinrichtung, insbesondere in deren Datenverarbeitungseinheit (22), gespeichert werden.

4. Verfahren nach einem der Ansprüche 1 bis 3, wobei die Radstellungswerte aller vermessenen Radfelgen (12, 14, 16, 18) gespeichert und/oder an einem Bildschirm (26) ausgegeben werden.

5. Verfahren nach einem der Ansprüche 1 bis 4, wobei die zwei Messgeräte (32, 36) fest einander gegenüber installiert werden.

6. Verfahren nach einem der Ansprüche 1 bis 4, wobei die zwei verschiebbaren Messgeräte (32, 36) einander gegenüber aufgestellt werden, und wobei die genaue Position der zwei Messgeräte (32, 36) zueinander über ein Bezugssystem bestimmt wird.

7. Verfahren nach einem der Ansprüche 1 bis 6, wobei in dem Fall, dass das zu vermessende Kraftfahrzeug (10) drei oder mehr Fahrzeugachsen hat, die Schritte c) und d) für die dritte und jede weitere Fahrzeugachse wiederholt werden.

8. Fahrwerksvermessungseinrichtung für Kraftfahrzeuge (10), umfassend:
- zwei Messgeräte (32, 36), die auf einem Messplatz (20) derart einander gegenüber positionierbar sind, dass beide Messgeräte (32, 36) jeweils einer Radfelge (12, 16; 14, 18) derselben Achse eines Kraftfahrzeugs (10) zugeordnet sind und durch ein Messgerät (32, 36) jeweils eine Radfelge (12, 14; 16, 18) vermessbar ist, wobei die relativen Positionen der Messgeräte (32, 36) zueinander bei der Durchführung der Messungen bestimmt sind,
- wobei eine Datenverarbeitungseinheit (22) vorgesehen ist, die in der Lage ist, die Messergebnisse von aufeinanderfolgenden Messungen von Radfelgen (12, 16; 14, 18) mindestens zweier Fahrzeugachsen des Kraftfahrzeugs (10) unter Berücksichtigung der relativen Positionen der Messgeräte (32, 36) zueinander in Radstellungswerte umzurechnen, und
- wobei ferner eine Ausgabeeinheit (26) zur Ausgabe der Radstellungswerte vorgesehen ist, **dadurch gekennzeichnet, dass** eine Positionierhilfe (72) vorgesehen ist zum Positionieren der Fahrzeugachsen zu den zwei Messgeräten (32,36), so dass das Kraftfahrzeug (10) bei einer ersten Messung der Radfelgen (12, 16) der ersten Fahrzeugachse des Kraftfahrzeugs (10) so auf dem Messplatz (20) steht, dass die Radfelgen (12, 16) seiner ersten Fahrzeugachse optimal gegenüber den Messgeräten (32, 36) positioniert sind, und bei einer zweiten Messung der Radfelgen (14, 18) der zweiten Fahrzeugachse des Kraftfahrzeugs (10) so auf dem Messplatz (20) steht, dass die Radfelgen (14, 18) seiner zweiten Fahrzeugachse optimal gegenüber den Messgeräten (32, 36) positioniert sind.

9. Fahrwerksvermessungseinrichtung nach Anspruch 8, wobei die zwei Messgeräte (32, 36) jeweils zwei Messköpfe (42, 43; 46, 47) mit Messkameras aufweisen, die unter unterschiedlichen Winkeln auf eine zu vermessende Radfelge (12, 16; 14, 18) ausgerichtet sind.

10. Fahrwerksvermessungseinrichtung nach Anspruch 8 oder 9, wobei die zwei Messgeräte (32, 36) fest einander gegenüber installiert sind.

11. Fahrwerksvermessungseinrichtung nach Anspruch 8 oder 9, wobei die zwei Messgeräte (32, 36) verschiebbar sind und über ein Bezugssystem (52, 56) verfügen, um deren relativen Positionen zueinander zu bestimmen.

12. Fahrwerksvermessungseinrichtung nach einem der Ansprüche 8 bis 11, wobei in der Datenverarbeitungseinheit (22) Vermessungsabläufe zur Steuerung der Vermessungen der zwei Messgeräte (32, 36) gespeichert sind.

13. Kraftfahrzeugprüfstrasse mit einer Fahrwerksvermessungseinrichtung nach einem der Ansprüche 8 bis 12.

## Claims

1. Method for measuring the chassis of a motor vehicle (10) by means of a contactless-measuring chassis-measuring device with two measuring units (32, 36) arranged opposite one another, comprising:
a) positioning of a first vehicle axle between the two measuring devices (32, 36) using a positioning aid (72) in such a way that the motor vehicle (10) is located on the measuring station (20) in such a way that the wheel rims (12, 16) of its first vehicle axle are positioned in an optimum way with respect to the measuring units (32, 36);
b) contactless measurement of the two wheel rims (12, 16) of the first vehicle axle by means of the two measuring units (32, 36);
c) positioning of a second vehicle axle between the two measuring units (32, 36) using a positioning aid (72) in such a way that the motor vehicle (10) is located on the measuring station (20) in such a way that the wheel rims (14, 18) of its second vehicle axle are positioned in an optimum way with respect to the measuring units (32, 36);
d) contactless measurement of the two wheel rims (14, 18) of the second vehicle axle by means of the two measuring units (32, 36); and
e) determination of the wheel setting values of all the measured wheel rims (12, 14, 16, 18) by means of the chassis-measuring device.

2. Method according to Claim 1, wherein the measurement sequences are stored in the chassis-measuring device, in particular in a data processing unit (22) of the chassis-measuring device, and wherein the measuring sequences are controlled in steps b) and d) by means of the chassis-measuring device, in particular by the data processing unit (22) thereof.

3. Method according to Claim 1 or 2, wherein the values which are measured in the measuring sequences in steps b) and d) are stored in the chassis-measuring device, in particular in the data processing unit (22) thereof.

4. Method according to one of Claims 1 to 3, wherein the wheel setting values of all the measured wheel rims (12, 14, 16, 18) are stored and/or output at a screen (26).

5. Method according to one of Claims 1 to 4, wherein the two measuring units (32, 36) are installed opposite one another in a fixed fashion.

6. Method according to one of Claims 1 to 4, wherein the two displaceable measuring units (32, 36) are set up opposite one another, and wherein the precise position of the two measuring units (32, 36) with respect to one another is determined by means of a reference system.

7. Method according to one of Claims 1 to 6, wherein if the motor vehicle (10) which is to be measured has three or more vehicle axles, the steps c) and d) are repeated for the third vehicle axle and for any further vehicle axle.

8. Chassis-measuring device for motor vehicles (10), comprising:
- two measuring units (32, 36) which can be positioned opposite one another on a measuring station (20) in such a way that the two measuring units (32, 36) are respectively assigned to a wheel rim (12, 16; 14, 18) of the same axle of a motor vehicle (10), and in each case a wheel rim (12, 14; 16, 18) can be measured by a measuring unit (32, 36), wherein the relative positions of the measuring units (32, 36) with respect to one another are determined when the measurements are carried out,
- wherein a data processing unit (22) is provided which is capable of converting the measurement results of successive measurements of wheel rims (12, 16; 14, 18) of at least two vehicle axles of the motor vehicle (10) into wheel setting values taking into account the relative positions of the measuring units (32, 36) with respect to one another, and
- wherein, in addition, an output unit (26) is provided for outputting the wheel setting values, **characterized in that** a positioning aid (72) is provided for positioning the vehicle axles with respect to the two measuring units (32, 36) so that during a first measurement of the wheel rims (12, 16) of the first vehicle axle of the motor vehicle (10) the motor vehicle (10) is located on the measuring station (20) in such a way that the wheel rims (12, 16) of its first vehicle axle are positioned in an optimum way opposite the measuring units (32, 36), and during a second measurement of the wheel rims (14, 18) of the second vehicle axle of the motor vehicle (10) they are located on the measuring station (20) in such a way that the wheel rims (14, 18) of its second vehicle axle are positioned in an optimum way opposite the measuring units (32, 36).

9. Chassis-measuring device according to Claim 8, wherein the two measuring units (32, 36) each have two measuring heads (42, 43; 46, 47) with measuring cameras which are oriented at different angles with respect to a wheel rim (12, 16; 14, 18) which is to be measured.

10. Chassis-measuring device according to Claim 8 or 9, wherein the two measuring units (32, 36) are installed opposite one another in a fixed fashion.

11. Chassis-measuring device according to Claim 8 or 9, wherein the two measuring units (32, 36) are displaceable and have a reference system (52, 56) for determining their relative positions with respect to one another.

12. Chassis-measuring device according to one of Claims 8 to 11, wherein measuring sequences for controlling the measurements of the two measuring units (32, 36) are stored in the data processing unit (22).

13. Motor vehicle test line having a chassis-measuring device according to one of Claims 8 to 12.

## Revendications

1. Procédé de mesure du train de roulement d'un véhicule automobile (10) par un dispositif de mesure de train de roulement mesurant sans contact et doté de deux appareils de mesure (32, 36) disposés l'un en face de l'autre, le procédé comprenant les étapes qui consistent à :
a) placer un premier essieu du véhicule entre les deux appareils de mesure (32, 36) en recourant à un accessoire de positionnement (72), de telle sorte que le véhicule automobile (10) soit placé sur l'emplacement de mesure (20) avec les jantes de roue (12, 16) de son premier essieu placées de manière optimale vis-à-vis des appareils de mesure (32, 36),
b) mesurer sans contact les deux jantes de roue (12, 16) du premier essieu du véhicule à l'aide des deux appareils de mesure (32, 36),
c) placer un deuxième essieu du véhicule entre les deux appareils de mesure (32, 36) en recourant à un accessoire de positionnement (72), de telle sorte que le véhicule automobile (10) soit placé sur l'emplacement de mesure (20) avec les jantes de roue (14, 18) de son deuxième essieu disposées de manière optimale par rapport aux appareils de mesure (32, 36),
d) mesurer sans contact les deux jantes de roue (14, 18) du deuxième essieu du véhicule à l'aide des deux appareils de mesure (32, 36) et
e) déterminer les valeurs de position des roues de toutes les jantes de roue (12, 14, 16, 18) mesurées à l'aide du dispositif de mesure de train de roulement.

2. Procédé selon la revendication 1, dans lequel le déroulement des mesures est conservé en mémoire dans le dispositif de mesure de train de roulement et en particulier dans une unité (22) de traitement des données du dispositif de mesure du train de roulement, le déroulement des mesures étant commandé pendant les étapes b) et d) par le dispositif de mesure de train de roulement et en particulier par son unité (22) de traitement de données.

3. Procédé selon la revendication 1 ou 2, dans lequel les valeurs mesurées au cours du déroulement des mesures des étapes b) et d) sont conservées en mémoire dans le dispositif de mesure de train de roulement et en particulier dans son unité (22) de traitement de données.

4. Procédé selon l'une des revendications 1 à 3, dans lequel les valeurs de position de toutes les jantes de roue (12, 14, 16, 18) sont conservées en mémoire et/ou présentées sur un écran (26).

5. Procédé selon l'une des revendications 1 à 4, dans lequel les deux appareils de mesure (32, 36) sont installés fixement l'un par rapport à l'autre.

6. Procédé selon l'une des revendications 1 à 4, dans lequel les deux appareils de mesure (32, 36) coulissants sont ajustés l'un par rapport à l'autre et dans lequel la position précise des appareils de mesure (32, 36) l'un vis-à-vis de l'autre est déterminée par un système de référence.

7. Procédé selon l'une des revendications 1 à 6, dans lequel au cas où le véhicule automobile (10) à mesurer possède trois essieux ou davantage, les étapes c) et d) sont répétées pour le troisième essieu et chacun des essieux supplémentaires.

8. Dispositif de mesure de train de roulement de véhicules automobiles (10), comprenant :
- deux appareils de mesure (32, 36) qui peuvent être placés l'un par rapport à l'autre en un emplacement de mesure (20) de telle sorte que les deux appareils de mesure (32, 36) soient chacun associé à une jante (12, 16; 14, 18) de roue du même essieu d'un véhicule automobile (10) et que chaque jante (12, 14; 16, 18) de roue puisse être mesurée par un appareil de mesure (32, 36), les positions relatives des appareils de mesure (32, 36) l'un par rapport à l'autre étant déterminées lors de l'exécution des mesures,
- une unité (22) de traitement de données qui est en mesure de recalculer en valeurs de position de roue les résultats de mesures successives des jantes de roue (12, 16; 14, 18) d'au moins deux essieux du véhicule automobile (10) en tenant compte de la position relative mutuelle des appareils de mesure (32, 36), et
- une unité de sortie (26) qui délivre les valeurs de position des roues étant en outre prévue, **caractérisé en ce que**
un accessoire de positionnement (72) est prévu pour positionner les essieux du véhicule par rapport aux deux appareils de mesure (32, 36) de telle sorte que lors d'une première mesure des jantes de roue (12, 16) du premier essieu du véhicule automobile (10), le véhicule automobile (10) soit placé sur l'emplacement de mesure (20) de telle sorte que les jantes de roue (12, 16) de son premier essieu de véhicule soient placées de manière optimale par rapport aux appareils de mesure (32, 36) et que lors d'une deuxième mesure des jantes de roue (14, 18) du deuxième essieu du véhicule automobile (10), le véhicule automobile (10) soit placé sur l'emplacement de mesure (20) de telle sorte que les jantes de roue (14, 18) de son deuxième essieu de véhicule soient placées de manière optimale par rapport aux appareils de mesure (32, 36).

9. Dispositif de mesure de train de roulement selon la revendication 8, dans lequel les deux appareils de mesure (32, 36) présentent chacun deux têtes de mesure (42, 43; 46, 47) dotées de caméras de mesure et orientées sous des angles différents par rapport à une jante de roue (12, 16; 14, 18) à mesurer.

10. Dispositif de mesure de train de roulement selon la revendication 8 ou 9, dans lequel les deux appareils de mesure (32, 36) sont installés fixement l'un par rapport à l'autre.

11. Dispositif de mesure de train de roulement selon la revendication 8 ou 9, dans lequel les deux appareils de mesure (32, 36) sont coulissants et disposent d'un système de référence (52, 56) pour déterminer leur position relative mutuelle.

12. Dispositif de mesure de train de roulement selon l'une des revendications 8 à 11, dans lequel des déroulements de mesures sont conservés en mémoire dans l'unité (22) de traitement de données pour commander les mesures des deux appareils de mesure (32, 36).

13. Ligne de vérification de véhicules dotée d'un dispositif de mesure de train de roulement selon l'une des revendications 8 à 12.
